# EUROPÄISCHE PATENTSCHRIFT

(11) **EP 2 776 765 B1**
(45) Veröffentlichungstag und Bekanntmachung des Hinweises auf die Patenterteilung: **20.01.2016**
(21) Anmeldenummer: 12777855.3
(22) Anmeldetag: 27.09.2012
(51) Int. Cl.: B64G 1/22, B64G 1/44

(54) **GELENK ZUM ENTFALTEN UND VERRIEGELN EINES SOLARGENERATORS ODER EINES REFLEKTORS**
ARTICULATED JOINT FOR DEPLOYING AND LOCKING A SOLAR GENERATOR OR A REFLECTOR
JOINT ARTICULÉ SERVANT À DÉPLOYER ET VERROUILLER UN GÉNÉRATEUR SOLAIRE OU UN RÉFLECTEUR

(30) Priorität: 28.09.2011 DE 102011114473
(43) Veröffentlichungstag der Anmeldung: 17.09.2014
(73) Patentinhaber: Airbus DS GmbH, 82024 Taufkirchen (DE)
(72) Erfinder: KNORRN, Raoul, 82110 Germering (DE); MEURER, René, 83052 Bruckmühl (DE)
(74) Vertreter: Häußler, Henrik
(86) Internationale Anmeldenummer: PCT/EP2012/004044
(87) Internationale Veröffentlichungsnummer: WO 2013/045088

(56) Entgegenhaltungen:
- DE-A1- 3 215 431
- DE-A1- 4 337 968
- DE-A1- 10 023 852
- US-A- 5 356 095
- US-A- 5 600 868
- US-A- 6 158 088

## Beschreibung

Die Erfindung betrifft ein Gelenk zum Entfalten und Verriegeln eines Solargenerators oder eines Reflektors oder anderer entfaltbarer Raumfahrtkomponenten.

Solargeneratoren oder Reflektoren stellen Entfaltsysteme aus bspw. einzelnen flexiblen Segmenten dar, die nach einer erfolgten Transportphase z.B. im Weltall entfaltet werden. Das Entfalten kann von federgetriebenen oder motorgetriebenen Entfaltgelenken bewirkt werden, mit denen die einzelnen Segmente direkt verbunden sein können oder mit denen starre Ausleger verbunden sind, die auf die Segmente einwirken. Bekannte derartige Gelenke haben am Anfang des Entfaltens eines um 180° schwenkbaren Solargenerators oder Reflektors ein sehr hohes Entfaltmoment. Hieraus resultiert eine hohe Belastung auf die Systemkomponenten. Gegen Ende des Entfaltens weisen bekannte Gelenke ein relativ kleines Moment auf, welches bei widrigen Umständen nicht zum völligen Entfalten des Solarpaneele oder des Reflektors ausreicht.

Um über die gesamte Dauer des Entfaltens ein etwa gleich großes Entfaltmoment gewährleisten zu können, schlägt die DE 196 49 741 A1 ein Gelenk vor, bei dem es durch die Form einer Gleitkurve möglich ist, während der ersten Hälfte des Entfaltens einen Teil der Entfaltenergie einer antreibenden Spiralfeder in einer Schenkelfeder zu speichern und diese gespeicherte Energie während der zweiten Hälfte des Entfaltens über die Steuerkurve wieder der Bewegung zuzuführen. Die DE 100 23 852 A1 schlägt ein Gelenk bestehend aus zwei Gelenkhälften, einer Drehachse und einem Antrieb vor, wobei der Antrieb eine als Konstant-Moment-Feder ausgebildete Antriebsfeder umfasst, die beim Entfalten über den gesamten Entfaltbereich ein nahezu konstantes Moment erzeugt. Durch das in etwa gleichbleibende Entfaltmoment werden Systemkomponenten sowie das Gelenk entlastet. Darüber hinaus werden auf die Achse einwirkenden Störmomente reduziert.

Besonders beim Entfalten auftretende Stoßkräfte werden reduziert. Da auch in der - in der Regel durch eine verriegelte Stellung - gekennzeichnete Endposition nach dem Entfalten ein höheres Entfaltmoment gegeben ist, ist das Gelenklager unter ständigem Anpressdruck, sodass eine spielfreie Gelenkeinheit gewährleistet ist.

In der Praxis sind weder Konstant-Moment-Federn noch andere Antriebe bislang in der Lage, ein tatsächlich gleichbleibendes Entfaltmoment abzugeben. Dies liegt u.a. daran, dass bei der Entfaltung des Gelenks über die Entfaltung auftretende Reibmomente nicht berücksichtigt und kompensiert werden können. Das Reibmoment resultiert aus elektrischen Leitungen des Solargenerators oder Reflektors, die zur Übertragung der elektrischen Leistung über Gelenkachsen geführt und beim Entfalten "gebogen" werden müssen. Es besteht daher nach wie vor die Gefahr, dass beim Erreichen des entfalteten Zustands aufgrund eines Verriegelns der Gelenke die Drehbewegung der Segmente des Solargenerators oder Reflektors plötzlich gestoppt wird. Hierdurch entstehen hohe "Einrast-Momente", welche bei der Dimensionierung der Segmente des Solargenerators oder Reflektors berücksichtigt werden müssen. Darüber hinaus besteht eine Gefahr zu hoher Belastungen des Entfaltungsmechanismus. Insbesondere am Anfang und am Ende der Entfaltung ist die Materialbelastung auf die einzelnen Komponenten am größten, so dass diese bislang für die Dimensionierung der Komponenten maßgeblich ist.

Es ist Aufgabe der vorliegenden Erfindung, ein Gelenk zum Entfalten und Verriegeln eines Solargenerators, eines Reflektors oder anderer entfaltbarer Raumfahrtkomponenten, insbesondere für die Verwendung im Weltall, anzugeben, welches die Materialbelastung auf die einzelnen Komponenten reduziert.

Diese Aufgabe wird gelöst durch ein Gelenk gemäß den Merkmalen des Patentanspruches 1. Vorteilhafte Ausgestaltungen ergeben sich aus den abhängigen Patentansprüchen.

Die Erfindung schafft ein Gelenk zum Entfalten und Verriegeln eines Solargenerators oder eines Reflektors oder anderer entfaltbarer Raumfahrtkomponenten, der aus zwei Gelenkhälften, einer Gelenkachse und einem Antrieb besteht. Erfindungsgemäß weist eine Antriebsfeder des Antriebs über den Entfaltwinkel der zwei Gelenkhälften eine progressive, über die Entfaltung ansteigende, Federkennlinie auf zur Kompensation eines über den Entfaltungswinkel variierenden, insbesondere ansteigenden, Reibmoments.

Durch eine progressive Federkennlinie kann das über den Entfaltungswinkel ansteigende Reibmoment berücksichtigt und kompensiert werden. Hierdurch kann eine Verminderung des Einrastmoments bei der sog. Teilentfaltung, bei der für das Transfer-Orbit nur das jeweils äußerste Segment um 90° geöffnet wird, reduziert werden. Darüber hinaus ergibt sich eine reduzierte Komponenten- und Materialbelastung während der Vollentfaltung der Segmente des Solargenerators oder Reflektors. Ein weiterer Vorteil besteht darin, dass ein erfindungsgemäß eingesetztes Gelenk auf mehrere Entfaltachsen erweiterbar ist. Durch die Berücksichtigung der Reibmomente, insbesondere aus der Verkabelung, über die Federkennlinie können auch höhere Reibmomente, aufgrund anderer Verkabelung bei höherer Leistung, akzeptiert und kompensiert werden.

Es ist zweckmäßig, wenn die Federkennlinie derart gewählt ist, dass diese über den gesamten Entfaltungswinkel einem vorgegebenen Vielfachen des Reibmoments, insbesondere zumindest dem dreifachen Reibmoment, der gegeneinander verdrehten Gelenkhälften entspricht. Besonders bevorzugt ist es, wenn die Federkennlinie derart gewählt ist, dass diese über den gesamten Entfaltungswinkel genau dem vorgegebenen Vielfachen des Reibmoments, insbesondere dem dreifachen Reibmoment der gegeneinander verdrehten Gelenkhälften entspricht. Hierdurch ist sichergestellt, dass auch in einem "worst case" das Öffnungsmoment ausreichend groß gegenüber der Summe aller Reibmomente ist.

In einer weiteren bevorzugten Ausgestaltung basiert der Antrieb auf einem Rollfeder-B-Motor, bei dem die Antriebsfeder auf einer Antriebsrolle angeordnet ist, wobei ein festes Ende der Antriebsfeder fest mit der Antriebsrolle verbunden ist und ein freies Ende der Antriebsfeder um die Gelenkachse abläuft. Zur Bereitstellung einer progressiven Federkennlinie weist die Antriebsfeder des Rollfeder-B-Motors eine von der Rechteckform abweichende Gestalt auf, wenn diese gestreckt ist. Die Antriebsfeder ist derart an bzw. in dem Rollfeder-B-Motor angeordnet, dass diese nach innen hin breiter wird. Hierdurch wird das Federmoment über die Entfaltung immer höher.

Gemäß einer alternativen oder zusätzlichen Ausgestaltung der Antriebsfeder weist diese eine trapezförmige Gestalt auf, welche zu ihrem freien Ende hin schmäler wird. Abweichend von der bevorzugten trapezförmigen Gestalt kann die Kontur der Antriebsfeder je nach gewünschter Feder-Kennlinie auch andere Gestalten aufweisen.

Gemäß einer weiteren alternativen oder zusätzlichen Ausgestaltung wird der natürliche Radius der Antriebsfeder zu ihrem freien Ende hin größer. Bei dieser Ausgestaltung kann die Antriebsfeder auf einer nicht kreisförmigen Antriebsrolle oder einer nicht kreisförmigen, um die Gelenkachse rotierenden Vorratsrolle angeordnet sein. Durch den Kurvenverlauf, d.h. den Radius, der Trommel kann das Federmoment in gewünschter Weise beeinflusst werden.

In einer weiteren alternativen oder zusätzlichen Ausgestaltung ist die Antriebsfeder aus mehreren Blättern unterschiedlicher Länge gebildet. Die Antriebsfeder besteht aus einer Anzahl aus einzelnen Blättern. Zum Erreichen der progressiven Federkennlinie werden unterschiedliche Blattlängen gewählt, sodass zum Beginn der Entfaltung nur wenige, bspw. mindestens ein, Federblatt aktiv ist. Je weiter sich das Gelenk öffnet, umso mehr Federblätter werden aktiv, was wiederum zum ansteigenden Federmoment führt. Die Gesamtkennlinie wird hierbei einen eher stufigen Verlauf aufweisen im Gegensatz zu einer trapezförmigen Ausgestaltung der Antriebsfeder.

Es kann weiterhin vorgesehen sein, dass die Antriebsfeder eine oder mehrere Aussparungen längs ihrer Mittellinie aufweist.

Konstruktionsbedingt kann die Geschwindigkeit der Entfaltung des Solargenerators oder Reflektors nicht geregelt werden. Bei herkömmlichen Gelenken ergibt sich hierdurch eine hohe Geschwindigkeit beim Zeitpunkt der Verriegelung, insbesondere bei der Teilentfaltung, bei der für das Transfer-Orbit nur das jeweils äußerste Paneel um 90° geöffnet wird. Der hierbei prinzipiell entstehende Einrastmoment kann durch das erfindungsgemäß vorgeschlagene Gelenk reduziert werden, da bis zu dieser Winkelstellung die Antriebsfeder vergleichsweise weniger Energie abgibt.

Aufgrund der progressiven Federkennlinie, die zum Beginn der Entfaltung das gleiche Moment abgibt, wie bislang bekannte Antriebsmechanismen, werden die Komponenten bzgl. ihrer Festigkeit nicht höher belastet als bislang. Allerdings erhält man aufgrund der progressiven Federkennlinie am Ende der Entfaltung ein wesentlich höheres Federmoment, wodurch höhere Reibmomente aus der Verkabelung akzeptabel sind. Die Federkennlinie ist dabei derart gewählt, dass diese zum Ende der Entfaltung hin derart gewählt ist, dass diese dem vorgegebenen Vielfachen, insbesondere dem dreifachen Reibmoment entspricht.

Die Erfindung wird nachfolgend näher anhand eines Ausführungsbeispiels in der Zeichnung erläutert. Es zeigen:
- Fig. 1: eine Seitenansicht eines prinzipiell bekannten Gelenks zum Entfalten und Verriegeln eines Solargenerators oder Reflektors,
- Fig. 2: eine Draufsicht auf das Gelenk von Fig. 1,
- Fig. 3: einen Schnitt längs A-A des Gelenks aus Fig. 2,
- Fig. 4: eine Ansicht in Richtung B des Gelenks aus Fig. 1,
- Fig. 5: eine perspektivische Ansicht des Gelenks aus Fig. 1,
- Fig. 6: ein erstes Ausführungsbeispiel einer gestreckten Antriebsfeder zur Verwendung in einem Gelenk gemäß den Fig. 1 bis 5,
- Fig. 7: ein zweites Ausführungsbeispiel einer gestreckten Antriebsfeder zur Verwendung in einem Gelenk gemäß den Fig. 1 bis 5, und
- Fig. 8: ein drittes Ausführungsbeispiel einer gestreckten Antriebsfeder zur Verwendung in einem Gelenk gemäß den Fig. 1 bis 5.

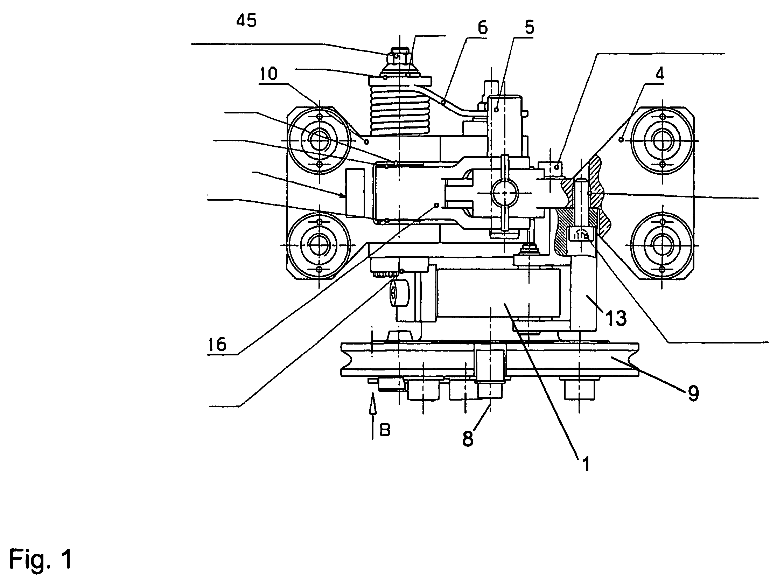

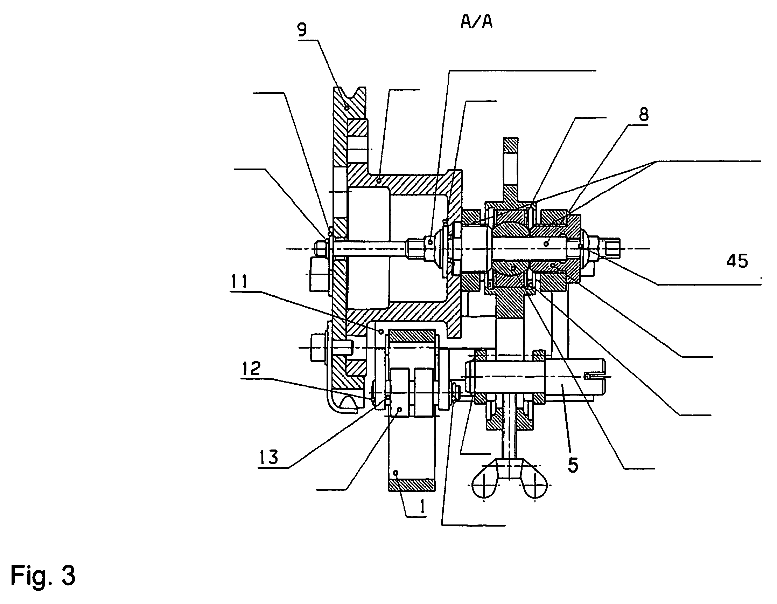

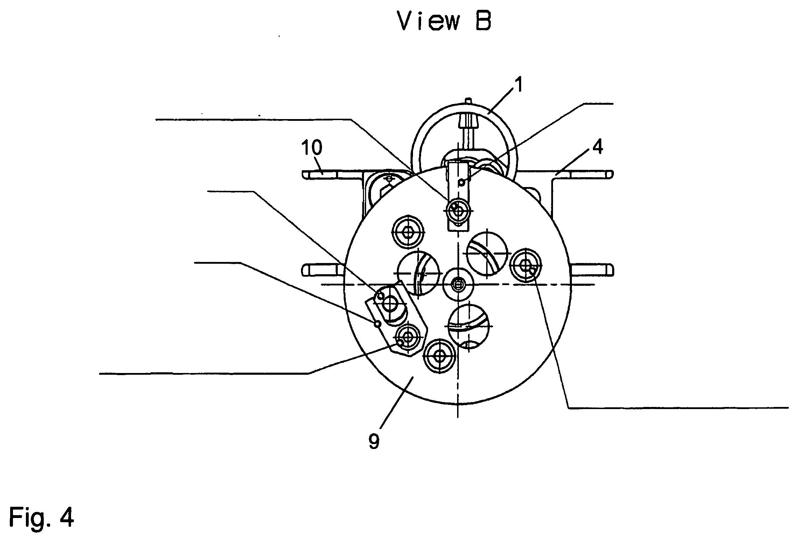

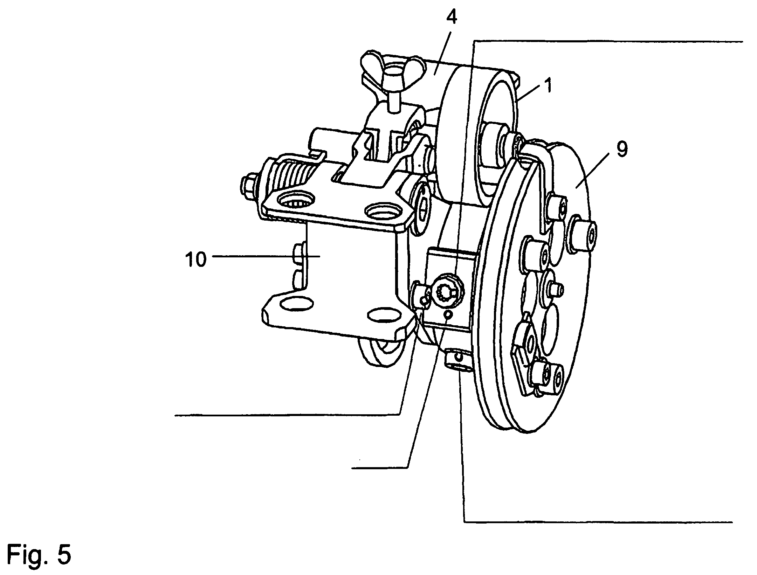

Ein Gelenk nach den Fig. 1 bis 5 zum Entfalten und Verriegeln von hier nicht dargestellten Solarpaneelen eines Solargenerators weist eine feste Gelenkhälfte 4 und eine schwenkbare Gelenkhälfte 10 auf, die eine gemeinsame Achse 8 (vgl. Fig. 1 und 3) haben. Die feste Gelenkhälfte 4 wird auch als Lagerträger, die schwenkbare Gelenkhälfte als Gabel bezeichnet. Die schwenkbare Gelenkhälfte 10 ist auf der Achse 8 drehbar gelagert. Sie ist in den Fig. 1 bis 5 durch eine auf der Achse 8 angeordneten Antriebsfeder 1 voll ausgeschwenkt. Dies bedeutet, die an den beiden Gelenkhälften 4, 10 über Pressbolzen befestigten Solarpaneele (nicht dargestellt) liegen in einer Ebene bzw. sind um 180° zueinander verschwenkt.

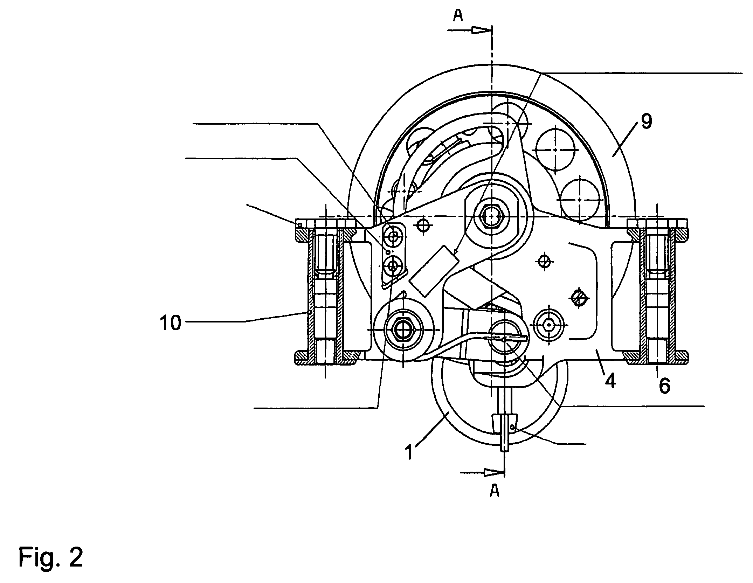

Ein festes Ende der Antriebsfeder 1, welches auf einer nicht näher ersichtlichen Antriebsrolle angeordnet ist, ist mit Hilfe von Verbindungselementen 11, 12, 13 an die feste Gelenkhälfte 4 geschraubt (vgl. Fig. 1 und 3). Weiterhin ist auf der schwenkbaren Gelenkhälfte 10 eine Einrastgabel 16 gelagert, die einen Einrastbolzen 5 aufnimmt. Auf der schwenkbaren Gelenkhälfte 10 ist gleichachsig mit der Einrastgabel 16 eine Schenkelfeder 6 angebracht, deren Schenkel durch einen Kopf des Einrastbolzens 5 führt (vgl. Fig. 1 und 2). Die Einrastgabel 16 und die Schenkelfeder 6 sind gemeinsam mit einer Schraube 45 auf der schwenkbaren Gelenkhälfte 10 befestigt. In den Fig. 1 bis 5 ist der Einrastbolzen 5 durch die Schenkelfeder 6 in eine Nut (Fig. 2) gedrückt, wodurch die schwenkbare Gelenkhälfte 10 mit der festen Gelenkhälfte 4 verriegelt ist.

Der prinzipielle Aufbau dieses Gelenks ist bspw. aus der DE 196 49 741 A1 bekannt, sodass auf weitere, für das Verständnis der Erfindung nicht erforderliche, aber dennoch dargestellte Details des Gelenks nicht weiter eingegangen wird.

Die Antriebsfeder 1 ist, wie am besten aus Fig. 2 ersichtlich, ähnlich wie bei einem Rollfeder-B-Motor ausgebildet. Die Antriebsfeder 1 ist auf einer Antriebsrolle angeordnet, wobei ein festes Ende der Antriebsfeder 1 fest mit der Antriebsrolle verbunden ist und ein freies Ende der Antriebsfeder 1 um die Gelenkachse 8 abläuft. Grundsätzlich ist eine derartig ausgestaltete Antriebsfeder in der Lage, ein über die Betätigung der Antriebsfeder, d.h. über den Entfaltungswinkel von 0° bis 180°, gleichbleibendes Entfaltmoment abzugeben.

Um die Materialbelastung auf die einzelnen Komponenten eines Entfaltungsmechanismus, bspw. Synchronisationsseile, -stäbe, -umlenkrollen 9 einschließlich Brackets, Entfaltgeschwindigkeits-Regelmechanismus (Motor-Gear-Unit MGU), usw., gering zu halten, wird in dem in den Fig. 1 bis 5 dargestellten Gelenk eine Antriebsfeder 1 eingesetzt, welche eine progressive, d.h. über die Entfaltung ansteigende, Federkennlinie aufweist. Hierdurch kann ein über den Entfaltungswinkel variierendes Reibmoment kompensiert werden. Ein solches über den Entfaltungswinkel variierendes, insbesondere ansteigendes, Reibmoment ist vor allem durch die (nicht dargestellten) elektrischen Leitungen des Solargenerators oder Reflektors verursacht, die über die Gelenkachsen geführt und beim Entfalten verformt werden.

Die progressive Federkennlinie sorgt dafür, dass die Antriebsfeder zum Beginn der Entfaltung (beginnend bei einem Winkel von 0°) ein geringeres Moment abgibt im Vergleich zum Ende der Entfaltung. Die Federkennlinie, die durch eine geometrische Ausgestaltung der Antriebsfeder festgelegt wird, wird dabei derart dimensioniert, dass diese über den gesamten Entfaltungswinkel von 0 bis 180° eine Federkennlinie aufweist, die vorzugsweise mindestens dem dreifachen Reibmoment entspricht. Hierdurch kann auch im schlimmsten Fall (bei hohen durch die elektrischen Leitungen zur Übertragung von elektrischer Leistung verursachten Reibmomenten) ein Öffnungsmoment bereitgestellt werden, das höher als die Summe aller auftretenden Reibmomente ist.

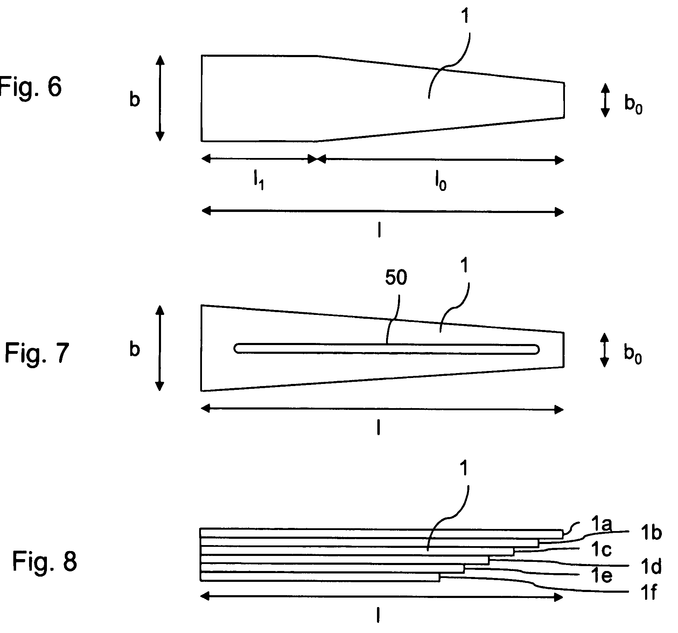

Eine solche Federkennlinie der Antriebsfeder 1 kann auf verschiedene Arten erzielt werden. Beispielsweise kann, wie dies in den Fig. 6 und 7 dargestellt ist, die Antriebsfeder zu ihrem freien Ende hin schmäler ausgebildet sein. Im gefalteten Zustand des Solargenerators ist das freie Ende der Antriebsfeder 1 aktiv. Beim Entfalten verschiebt sich der aktive Bereich der Antriebsfeder zu seinem inneren, festen Ende hin. Wenn also die Feder zum festen Ende hin breiter wird, wird das Federmoment über die Entfaltung immer höher.

In der Ausgestaltungsvariante gemäß Fig. 6 weist die Feder 1 an ihrem festen Ende, das an der Antriebsrolle angeordnet ist, eine Breite b auf. Die Breite b wird über eine Länge l₁ beibehalten. Anschließend verjüngt sich die Feder zu ihrem freien Ende hin über die Länge l₀ auf eine Breite b₀, welche kleiner ist als die Breite b. Die Gesamtlänge I der gestreckt dargestellten Feder ergibt sich zu l=l₁+l₀.

Demgegenüber zeigt die Ausgestaltungsvariante gemäß Fig. 7 eine trapezförmige Gestalt, welche zu ihrem freien Ende hin eine kleinere Breite b₀ als an ihrem festen Ende aufweist. Darüber hinaus weist die gestreckt dargestellte Feder im Ausführungsbeispiel gemäß Fig. 7 eine optionale Aussparung auf der Mittellinie der Feder auf. Hier ist lediglich eine einzige Aussparung 50 dargestellt.

In einer nicht dargestellten Abwandlung könnten auf der Mittellinie der Feder auch mehrere hintereinander angeordnete Aussparungen gleicher oder unterschiedlicher Länge vorgesehen sein. Die Breite der Aussparung bemisst sich nach der zu erzielenden Federkennlinie. Die Aussparung(en) könnte(n) ebenfalls bei den Ausgestaltungsvarianten gemäß den Fig. 6 und 8 vorgesehen sein.

In einer weiteren Abwandlung kann die Außenkontur der gestreckten Feder auch eine beliebige andere Form aufweisen, wenn diese dazu geeignet ist, die gewünschte Federkennlinie bereit zu stellen.

Fig. 8 zeigt ein weiteres Ausführungsbeispiel einer Antriebsfeder 1 in Seitenansicht, bei dem die Antriebsfeder 1 lediglich beispielhaft aus insgesamt sechs einzelnen Blättern 1 a, 1 b, 1 c, 1 d, 1 e, 1f besteht. Die Blätter weisen eine unterschiedliche Länge auf. Beim Beginn der Entfaltung sind nur wenige Federblätter am freien Ende der Antriebsfeder aktiv. Je weiter sich das Gelenk öffnet, umso mehr Federblätter kommen hinzu, was wiederum zu dem erwünschten, ansteigenden Federmoment führt. Die Federkennlinie wird im Gegensatz zu den in Fig. 6 und 7 dargestellten Varianten nicht stetig, sondern annähernd stufig verlaufen.

In einer weiteren, nicht dargestellten Ausführungsvariante wird der natürliche Radius der Antriebsfeder zu ihrem freien Ende hin größer. Dies kann bspw. durch eine nicht kreisförmige Antriebsrolle erzielt werden. Der Radius der Antriebsrolle geht dabei in die Formel zu Berechnung des Federmomentes ein.

Die in den Fig. 6, 7 und 8 dargestellten Design-Varianten sowie die zuletzt genannte Variante können grundsätzlich auch miteinander kombiniert werden.

In den zeichnerischen Darstellungen sind die Antriebsfedem zur besseren Verständlichkeit ihres Designs in gestreckter Form dargestellt.

Durch die Verwendung einer progressiven Antriebsfeder, wie in den Fig. 6 bis 8 gezeigt, kann zum Beginn der Entfaltung ein Moment abgegeben werden, wie dies bei den bislang verwendeten Konstant-Moment-Fedem erzeugt wird. Hierdurch werden die Entfaltmechanismen bzgl. ihrer Festigkeit nicht höher belastet als bei einem herkömmlichen Gelenk. Bedingt durch das über die Entfaltung ansteigende Federmoment erhält man jedoch am Ende der Entfaltung ein höheres Federmoment, bspw. ein doppelt so großes Federmoment, sodass auch größere Reibmomente verarbeitet werden können. Die Dimensionierung erfolgt derart, dass das Federmoment der Federkennlinie derart ist, dass dieses mindestens am Ende der Entfaltung zumindest um den Faktor 3 größer ist als die Summe sämtlicher auftretender Reibmomente.

### Bezugszeichenliste

- 1: Antriebsfeder
- 4: (feste) Gelenkhälfte
- 5: (Einrast-)Bolzen
- 6: Schenkelfeder
- 8: Drehachse
- 9: Seilscheibe
- 10: (schwenkbare) Gelenkhälfte
- 11: Verbindungselement
- 12: Verbindungselement
- 13: Verbindungselement
- 16: Einrastgabel
- 45: Schraube
- 50: Aussparung

## Patentansprüche

1. Gelenk zum Entfalten und Verriegeln eines Solargenerators oder eines Reflektors oder anderer entfaltbarer Raumfahrtkomponenten, bestehend aus zwei Gelenkhälften (4, 10), einer Gelenkachse und einem Antrieb, **dadurch gekennzeichnet**t, dass eine Antriebsfeder (1) des Antriebs über den Entfaltwinkel der zwei Gelenkhälften (4, 10) eine progressive, über die Entfaltung ansteigende, Federkennlinie aufweist zur Kompensation eines über den Entfaltungswinkel variierenden Reibmoments.

2. Gelenk nach Anspruch 1, **dadurch gekennzeichnet, dass** die Federkennlinie derart gewählt ist, dass diese über den gesamten Entfaltungswinkel zumindest einem vorgegebenen Vielfachen des Reibmoments, insbesondere dem dreifachen Reibmoment, der gegeneinander verdrehten Gelenkhälften entspricht.

3. Gelenk nach Anspruch 1 oder 2, **dadurch gekennzeichnet, dass** die Federkennlinie derart gewählt ist, dass diese über den gesamten Entfaltungswinkel genau dem vorgegebenen Vielfachen des Reibmoments, insbesondere dem dreifachen Reibmoment, der gegeneinander verdrehten Gelenkhälften entspricht.

4. Gelenk nach einem der vorhergehenden Ansprüche, **dadurch gekennzeichnet, dass** der Antrieb auf einem Rollfeder-B-Motor basiert, bei dem die Antriebsfeder auf einer Antriebsrolle angeordnet ist, wobei ein festes Ende der Antriebsfeder fest mit der Antriebsrolle verbunden ist und ein freies Ende der Antriebsfeder um die Gelenkachse abläuft.

5. Gelenk nach Anspruch 4, **dadurch gekennzeichnet, dass** die Antriebsfeder (1) eine von der Rechteckform abweichende Gestalt aufweist, wenn diese gestreckt ist.

6. Gelenk nach Anspruch 5, **dadurch gekennzeichnet, dass** die Antriebsfeder eine trapezförmige Gestalt aufweist, welche zu ihrem freien Ende hin schmäler wird.

7. Gelenk nach einem der Ansprüche 4 bis 6, **dadurch gekennzeichnet, dass** der natürliche Radius der Antriebsfeder (1) zu ihrem freien Ende hin größer wird.

8. Gelenk nach einem der Ansprüche 4 bis 7, **dadurch gekennzeichnet, dass** die Antriebsfeder (1) aus mehreren Blättern unterschiedlicher Länge gebildet ist.

9. Gelenk nach einem der Ansprüche 4 bis 8, **dadurch gekennzeichnet, dass** die Antriebsfeder (1) eine oder mehrere Aussparungen längs ihrer Mittellinie aufweist.

## Claims

1. Articulation for deploying and locking a solar generator or a reflector or other deployable aerospace components, comprising two articulation halves (4, 10), an articulation spindle and a drive, **characterized in that** a drive spring (1) of the drive, over the angle of deployment of the two articulation halves (4, 10) has a progressive spring characteristic which increases as deployment progresses and is intended to compensate for a friction moment which varies over the angle of deployment.

2. Articulation according to Claim 1, **characterized in that** the spring characteristic is to be selected such that, over the entire angle of deployment, it corresponds at least to a predetermined multiple of the friction moment, in particular to three times the friction moment, of the articulation halves rotated in relation to one another.

3. Articulation according to Claim 1 or 2, **characterized in that** the spring characteristic is to be selected such that, over the entire angle of deployment, it corresponds to precisely the predetermined multiple of the friction moment, in particular to three times the friction moment, of the articulation halves rotated in relation to one another.

4. Articulation according to one of the preceding claims, **characterized in that** the drive is based on a spiral spring B motor, in which the drive spring is arranged on a drive roller, wherein a fixed end of the drive spring is fixed to the drive roller and a free end of the drive spring runs around the articulation spindle.

5. Articulation according to Claim 4, **characterized in that** the drive spring (1), when straightened out, is of non-rectangular form.

6. Articulation according to Claim 5, **characterized in that** the drive spring is of trapezoidal form, becoming narrower in the direction of its free end.

7. Articulation according to one of Claims 4 to 6, **characterized in that** the natural radius of the drive spring (1) increases in the direction of the free end of the drive spring.

8. Articulation according to one of Claims 4 to 7, **characterized in that** the drive spring (1) is formed from a plurality of leaves of different length.

9. Articulation according to one of Claims 4 to 8, **characterized in that** the drive spring (1) has one or more apertures along its centre line.

## Revendications

1. Joint articulé servant à déployer et verrouiller un générateur solaire ou un réflecteur ou d'autres composants aérospatiaux déployables, se composant de deux moitiés de joint articulé (4, 10), d'un axe de joint articulé et d'un entraînement, **caractérisé en ce qu'**un ressort d'entraînement (1) de l'entraînement présente, sur l'angle de déploiement des deux moitiés de joint articulé (4, 10), une caractéristique de ressort progressive, croissante sur le déploiement, pour la compensation d'un couple de frottement variant sur l'angle de déploiement.

2. Joint articulé selon la revendication 1, **caractérisé en ce que** la caractéristique de ressort est choisie de telle manière que celle-ci corresponde, sur tout l'angle de déploiement, au moins à un multiple prédéterminé du couple de frottement, en particulier au triple du couple de frottement, des moitiés de joint articulé tournées l'une par rapport à l'autre.

3. Joint articulé selon la revendication 1 ou 2, **caractérisé en ce que** la caractéristique de ressort est choisie de telle manière que celle-ci corresponde, sur tout l'angle de déploiement, exactement au multiple prédéterminé du couple de frottement, en particulier au triple du couple de frottement des moitiés de joint articulé tournées l'une par rapport à l'autre.

4. Joint articulé selon l'une quelconque des revendications précédentes, **caractérisé en ce que** l'entraînement est basé sur un moteur B à ressort enroulé, dans lequel le ressort d'entraînement est disposé sur un rouleau d'entraînement, dans lequel une extrémité fixe du ressort d'entraînement est attachée au rouleau d'entraînement et une extrémité libre du ressort d'entraînement se termine autour de l'axe de joint articulé.

5. Joint articulé selon la revendication 4, **caractérisé en ce que** le ressort d'entraînement (1) présente une forme s'écartant de la forme rectangulaire, lorsqu'il est étendu.

6. Joint articulé selon la revendication 5, **caractérisé en ce que** le ressort d'entraînement présente une forme trapézoïdale, qui se rétrécit en direction de son extrémité libre.

7. Joint articulé selon l'une quelconque des revendications 4 à 6, **caractérisé en ce que** le rayon naturel du ressort d'entraînement (1) augmente en direction de son extrémité libre.

8. Joint articulé selon l'une quelconque des revendications 4 à 7, **caractérisé en ce que** le ressort d'entraînement (1) est formé de plusieurs feuilles de différentes longueurs.

9. Joint articulé selon l'une quelconque des revendications 4 à 8, **caractérisé en ce que** le ressort d'entraînement (1) présente une ou plusieurs découpes le long de sa ligne centrale.
